# EUROPEAN PATENT APPLICATION

(11) **EP 4 708 093 A1**
(43) Date of publication of application: **11.03.2026**
(21) Application number: 25201397.4
(22) Date of filing: 10.09.2025
(51) Int. Cl.: G06F 21/45, G06F 9/54, G06F 21/57, G06N 20/00, H04L 9/40, G06F 21/60, G06F 21/62, G06F 9/50

(54) **APS DATA COLLECTION AND MODIFICATION SYSTEM AND METHOD FOR ANALYTICS**

(30) Priority: 10.09.2024 US 202418829643
(71) Applicant: CloudBlue LLC, Irvine, CA 92612 (US)
(72) Inventor: KOSTYULIN, Ilya, 08912 Badalona (ES); BUROV, Mikhail, 1415 Sofia (BG); ANDRIUKHIN, Evgenii, 1712 Sofia (BG)
(74) Representative: Patrade A/S

(57) **Abstract**

Systems and methodologies are provided for the automated collection, transformation, and documentation of API endpoints in cloud environments, streamlining cybersecurity workflows. A discovery module autonomously identifies endpoints accessible by various user roles. An Identifier Normalization Module dynamically adapts unique identifiers to a standardized naming convention for documentation. The system can further include a comparison engine to evaluate and visualize API access across different user roles, facilitating a comprehensive audit and compliance process. Systems and methods enable consistent endpoint mapping, role-based access clarity, and enhanced security posture management through an interactive dashboard, generating insights into the cloud instance's API landscape.

## Description

### CROSS-REFERENCE TO RELATED APPLICATIONS

This application is a Continuation-in-Part (CIP) of U.S. patent application Ser. No. 18/493,764, filed on October 24, 2023, which is a Continuation-in-Part of U.S. patent application Ser. No, 17/980,336, filed on November 3, 2022, each application incorporated herein by reference in their entirety.

### BACKGROUND

The present invention relates to the field of software development, specifically to the field of automated cybersecurity systems.

Traditional methods of collecting application data for security analytics involve significant manual effort, which is inefficient and error-prone. Organizations face emerging challenges in securing their cloud-based applications and services. As cloud computing continues to evolve, the complexity of managing security postures of microservices-based architectures increases. Organizations deploy a multitude of cloud applications, each with unique configurations and application programming interfaces (APIs), resulting in a diverse and fragmented security landscape.

Traditionally, this process requires significant manual effort as each endpoint must be identified and documented, a task that becomes exponentially more complex with the scale and customizability of the cloud commerce environment. In traditional systems, the process of collecting, normalizing, and analyzing security data across different cloud applications is often manual, inefficient, and error-prone. The use of Global Unique Identifiers (identifiers) across installations further complicates this process, making the transfer and application of security configurations and testing procedures between instances problematic. Moreover, the proprietary formats used by Application Packaging Standards (APS) can be a significant barrier to integrating standard security testing tools and methods.

To enhance cybersecurity measures and streamline the process of data collection and analysis, there is a need for an advanced system that can automate the extraction, transformation, and utilization of application data across various cloud services. This system should be capable of overcoming the limitations of proprietary data formats and provide a unified interface that can integrate with a wide range of security testing tools. The ability to predict potential vulnerabilities and preemptively counteract threats through intelligent data analytics and machine learning is a necessary advancement in the field of cybersecurity.

### BRIEF SUMMARY OF THE INVENTION

Embodiments described herein provide a system and method for collecting, organizing, and understanding the endpoints accessible to various user roles in cloud instances. This system simplifies the otherwise labor-intensive and complex process of identifying all available APIs within a given cloud instance, tailored to the unique global unique identifiers (identifiers) that are inherent to each instance. According to some embodiments, systems and methods automate data collection from APS systems and transform this data into standardized formats suitable for advanced security analysis. Systems and methods are provided to work with existing cybersecurity frameworks, enhancing their capabilities to predict, detect, and respond to security vulnerabilities efficiently. By automating these processes, the invention aims to reduce manual effort, minimize errors, and improve the security posture of cloud-based services.

An APS Schema, such as an APS bus using its own format of API specification, may be incompatible with well-known Natural Language Processing (NLP) standards like OpenAPI. This creates challenges in integrating standard security testing tools. Additionally, the use of identifiers in API requests that are unique to each platform installation complicates automated security and QA testing since endpoints cannot be reused across different instances.

Unlike traditional systems, embodiments herein significantly reduce the time required to collect endpoints available to a given user role within a cloud instance. Traditionally, this process requires significant manual effort as each endpoint must be identified and documented-a task that becomes exponentially more complex with the scale and customizability of the cloud commerce environment.

According to some embodiments, the system can automate this collection by employing a discovery module, e,g,, an endpoint discovery module, that scans the cloud commerce environment using authenticated sessions corresponding to different user roles. It can leverage the permissions associated with each role to access and list all APIs that the user role can interact with. This can be done using a combination of web scraping techniques, API calls, and deep packet analysis to ensure a comprehensive endpoint map. The module not only detects the APIs but also classifies them according to the permissions required, aligning them with the corresponding user roles.

According to some embodiments, systems and methods can generate an OpenAPI document that accurately describes the APS API available in a given cloud instance, considering the identifier object references used. The challenge with identifiers in cloud commerce platforms is that they are unique to each instance, complicating the process of generalizing API documentation across different environments. To address the limitations of manual data collection, the automated data collection system can report collected data in a readable format to tools such as RESTful APIs in an automated manner.

For example, systems and methods can address this challenge by incorporating an identifier resolution module. This component dynamically translates identifiers within the instance into a standardized naming convention used in the OpenAPI specification. As it catalogs the endpoints, the module maps the unique identifiers to human-readable tags while maintaining the association with the original identifier. This allows the OpenAPI documentation to be both understandable to users and reflective of the actual structure within the specific cloud instance.

OpenAPI document generation can be performed by an intelligent process that accounts for nuances and variations in API definitions across different instances. It can use templates and machine learning to infer patterns and structures from the APS API, which allows it to create robust documentation that developers and security professionals can readily use for API integration and security testing purposes.

According to some embodiments, systems and methods can compare API accessibility for different user roles on a given cloud instance. This enables auditing and security purposes, as it allows for a clear understanding of which roles have access to sensitive operations and data within the cloud commerce environment. For example, systems and methods can include a comparison engine that takes the role-based endpoint maps generated by the discovery module and performs a differential analysis. By overlaying the endpoint maps of different user roles, the engine can identify which APIs are exclusive to certain roles and which are shared among multiple roles. This comparison can be presented through an interactive dashboard that allows administrators to visualize the access levels of each role concerning the cloud instance's APIs.

The differential analysis performed by the comparison engine enables compliance with the principle of least privilege in cybersecurity. By delineating the access each role has, embodiments enable proactively identification and mitigation of potential security risks that may arise from overly permissive role configurations.

Embodiments automate the collection of APS data, which can be integral to vulnerability detection and tracking systems and interact with the APS API using user credentials to collect data on installed applications, types, and endpoints. This data can then be converted into the OpenAPI format, making it compatible with standard security testing tools. The system enables accurate and efficient data collection, enhancing the security analytics capabilities of the vulnerability detection and tracking systems.

### BRIEF DESCRIPTION OF THE DRAWINGS/FIGURES

FIG. 1 is an illustration of an example operating environment that includes a scalable reporting system for security analysis, according to some embodiments.
FIG. 2 is an illustration of an automated data collection system for security analysis according to some embodiments.
FIG. 3 is an illustration of an automated data collection system for security analysis according to some embodiments.
FIG. 4 is a flow diagram of a method for automated data collection and security analysis according to some embodiments.
FIG. 5 is a block diagram of example components of a device, according to some embodiments of the present disclosure.
FIG. 6 is an illustration of the Endpoint Identification Module for managing API data within a cloud instance, according to some embodiments.
FIG. 7 is an illustration of the Identifier Normalization Module for standardizing API identifiers across different cloud instances, according to some embodiments.
FIG. 8 is a block diagram of the role-based access comparison module configured to analyze API accessibility and predict potential vulnerabilities, according to some embodiments.
FIG. 9 is a block diagram of the example components of a device, illustrating the processor, memory, and communication interfaces used to implement the system, according to some embodiments.

### DETAILED DESCRIPTION OF THE INVENTION

The unified and automated system for managing and evaluating the security posture of microservices addresses the limitations of traditional approaches through a comprehensive approach. The system employs a data normalization process to transform and standardize security data from various cloud security tools. This data normalization process allows for a higher-level view of the security posture of microservices, simplifying the complexity of managing and evaluating security across diverse components and programming languages.

The data normalization process involves extracting and consolidating security-related data from multiple Application Security tools. This data can then be integrated into a unified and standardized format within a centralized platform. By abstracting the security data, the system provides a comprehensive understanding of the security landscape and eliminates the need to manually navigate through various tools and datasets.

The transformed and standardized security data supports automation and integration with existing development tools and processes. It allows for efficient data collection, analysis, and reporting, reducing reliance on manual efforts and minimizing the potential for human error.

The detailed description includes methods for interacting with the APS API to collect data on installed applications and their types. The system uses endpoints to gather necessary information. The collected data can then be transformed into the OpenAPI format, facilitating integration with various security analysis tools. This process ensures that data can be consistently formatted and easily usable for security analytics.

In one exemplary embodiment, the system can be configured to interact with the APS API using authenticated sessions corresponding to different user roles. It can be configured to collect applications via a first endpoint and retrieves types via a second endpoint. Once types are collected, resources that implement those types can be retrieved using RQL queries. The APS bus can respond with endpoints available for particular resources in APS Schema format. This information can then be converted to an NLP standard, such as an OpenAPI standard, for further processing.

To map the API endpoints, the system can perform authenticated requests to the APS API, collecting data on installed applications and their types. It can then retrieve endpoints for these applications and transforms the data into the NLP standard, such as an OpenAPI format. This process can ensure that all API endpoints are accurately mapped and documented for security analysis. The system can generate OpenAPI documents based on the collected APS data. This may involve translating the APS Schema format into the NLP or OpenAPI standard, ensuring compatibility with standard API testing and security analysis tools. The generated documents can provide a comprehensive description of the available API endpoints, including their properties and relationships, facilitating efficient and accurate security testing.

For example, in some embodiments the system employs a data collection process that can involve interacting with the APS API using provided credentials to collect data on installed applications and their respective types. Initially, the system collects applications via the first endpoint, followed by retrieving types via the second endpoint. The collected data can then be transformed into the NLP/OpenAPI format for further processing and integration with security analysis tools. The collected data can be integrated into internal security analysis systems, enabling comprehensive analysis and testing. The transformed data in an NLP/OpenAPI format can be fed into various security tools, enhancing the ability to identify potential vulnerabilities and improve security posture. The system utilizes various tools and technologies to ensure effective data collection and transformation. In some non-limiting examples, the system can utilize REST APIs for data interaction, an NLP standard such as OpenAPI for data standardization, and security testing tools such as RESTler for fuzzing and a Corpus Generation Tool for creating specialized test cases.

The automated APS data collection system provides benefits such as reducing the time required for data collection and minimizing manual effort. It facilitates the creation of OpenAPI documents that describe APS API endpoints, improving integration with security testing tools. The system also enables comparison of API accessibility across different user roles, improving security audit capabilities.

The system employs visualization techniques to present the abstracted security data in a clear and accessible manner. Visualizations, graphs, charts, and reports provide an overview of vulnerabilities, risk scores, historical trends, and forecasting analysis. This enables development teams to make informed decisions and prioritize security improvements effectively.

The data normalization process enhances the efficiency of the security evaluation process, allowing development teams to focus on core tasks rather than tedious security management. By providing a unified and standardized view of security data, the system facilitates effective risk assessment and enables the proactive identification and resolution of vulnerabilities.

Furthermore, the system's data normalization process improves collaboration between development and security teams. It presents a common understanding of the security posture, promoting effective communication and coordination in addressing security concerns.

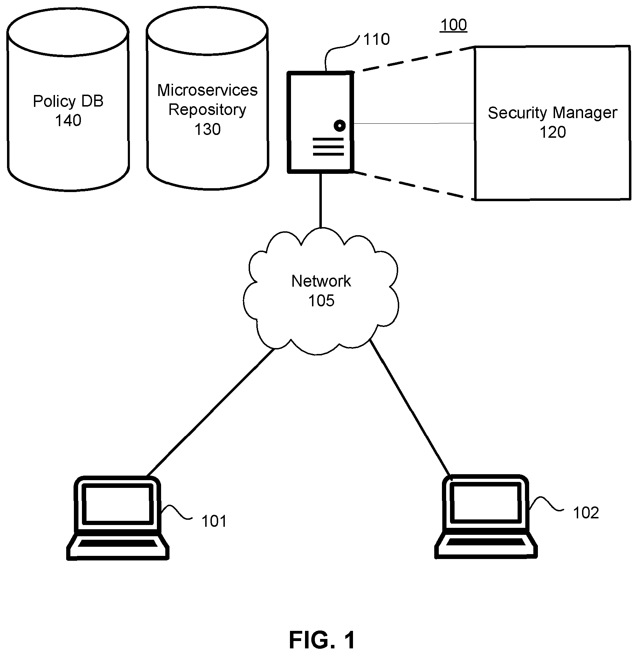

FIG. 1 illustrates an environment 100 for system 110 directed to managing the security posture of microservices through various layers of Application Security. The environment 100 can include System 110, which can provide users (e.g., 101 and 102 via network 105) with this understanding of the security posture. System 110, which can comprise one or more modules, such as Security Manager 120, Microservices Repository 130, and Policy Database 140.

Security Manager 120 provides a centralized unit for aggregating, managing, and analyzing security-related data. In an embodiment, this element has capabilities to interact with Application Security utilities like Anchore, SonarQube, and Dependency Tool. It can also be enriched by Development cluster tools such as Jenkins, BitBucket, and Artifactory. This allows Security Manager 120 to oversee all obligatory and optional layers of security, including base image analysis, source code analysis, third-party dependencies analysis, and optionally, API security.

Microservices Repository 130 can be configured to storing metadata about all deployed microservices, including container orchestration details and network configurations. In an embodiment, this repository can be actively monitored by Security Manager 120 for any changes, ensuring that the foundation of the microservices remains secure.

Policy Database 140 contains predefined and dynamically generated security policies that can be applied to microservices. These policies can be based on the analysis conducted at various security layers and could be written in languages like Open Policy Agent Rego. In a non-limiting example, Security Manager 120 uses these policies to enforce security measures on the microservices managed in Microservices Repository 130.

According to some embodiments, Security Manager 120 can be configured to aggregate and analyze data across multiple layers of security. Specifically, Security Manager 120 can incorporate findings from Layer 1, which scans base images for vulnerabilities using tools like Anchore. Data from Layer 2, responsible for source code analysis through tools like SonarQube, can also be integrated. Additionally, Layer 3's focus on third-party dependencies analysis, performed by by tools such as Dependency Tool, can be included. Each of these layers can be further enriched by output from Development cluster tools like Jenkins, BitBucket, and Artifactory, providing an detailed security landscape.

Microservices Repository 130 maintains metadata about microservices that are foundational to the layers of security. For example, details about container images, scrutinized in Layer 1, and source code, evaluated in Layer 2, are stored. Security Manager 120 actively monitors this repository to correlate changes in these elements with its multilayered security analysis. If changes are detected, Security Manager 120 leverages Policy Database 140 to select and enforce the relevant security policies based on the cumulative security data.

Policy Database 140 houses security policies that align with the principles of each obligatory and optional security layer. These policies may specify, for instance, acceptable vulnerability levels in base images as defined in Layer 1, or required security protocols for third-party dependencies as in Layer 3. Security Manager 120 relies on these policies, written in languages like Open Policy Agent Rego, to make informed decisions about security enforcement in the microservices stored in Microservices Repository 130. This ensures that security measures are both comprehensive and targeted, addressing potential risks effectively across all layers.

For example, system 110 can be implemented integrate collected data with various tools for API testing (e.g., INSOMNIA for API testing). The system facilitates automated testing of API endpoints, improving the efficiency and accuracy of security assessments. The system can improve automation of data collection processes, reduce manual effort required, and improve integration with standard security testing tools. By converting APS data into the OpenAPI format, the system enhances the ability to perform comprehensive security analysis and testing.

The automated APS data collection system provides an efficient technical solution for enhancing the security posture of software systems. By automating the collection and transformation of APS data into a standardized format, the system resolves challenges of manual data collection and integration with security testing tools, providing improvements in accuracy and efficiency.

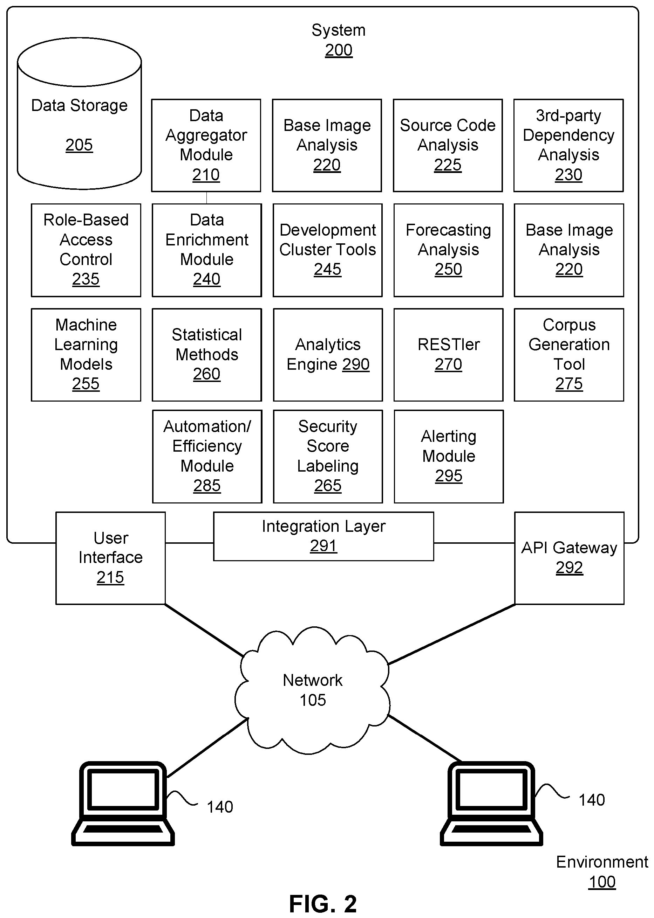

FIG. 2 depicts centralized system 200, which can be an embodiment of system 110, to manage the security posture of microservices effectively. According to some embodiments, system 200 can include Data Storage 205, Data Aggregator Module 210, User Interface 215, Base Image Analysis 220, Source Code Analysis 225, Third-party Dependencies Analysis 230, Role-Based Access Control 235, Data Enrichment Module 240, Development Cluster Tools 245, Forecasting Analysis 250, machine learning models 255, statistical methods 260, Security Score Labeling 265, RESTler 270, Corpus Generation Tool 275, Automation and Efficiency Module 285, API Gateway 292, Analytics Engine 290, and Alerting Module 295. Each of these elements serves a specific function within the centralized system for managing the security posture of microservices.

In an embodiment, the centralized system, known as system 200, aims to manage and analyze data generated by Application Security utilities, including but not limited to, vulnerability scanners, code analyzers, and third-party dependency checkers. The system employs a multi-layered approach to security in a microservices environment, making it cohesive and efficient. In some embodiments, it can include three obligatory layers and one optional layer for comprehensive security.

Data Storage 205 provides a repository for all security-related data. It supports both SQL and NoSQL databases. Its design allows for horizontal scalability to handle increasing amounts of data and to provide high availability. In a non-limiting example, a MongoDB NoSQL database can be used to store unstructured data, while a PostgreSQL SQL database handles structured data, ensuring efficient data storage and retrieval.

Data Aggregator Module 210 can be configured to collect data from various Application Security tools 210 like vulnerability scanners, source code analyzers, and third-party dependency checkers. It can employ a plug-and-play architecture, allowing it to integrate with new security tools easily. It normalizes the data to a common format and performs initial filtering before sending the aggregated data to the User Interface 215 through secure APIs, employing TLS encryption for data transmission.

User Interface 215 can provide real-time monitoring capabilities. It displays data in various formats such as graphs, charts, and tables for easier comprehension. Security personnel can customize the dashboard to focus on metrics that are most relevant to the organization's needs. The Central Dashboard can be built using technologies like React for the frontend and Node.js for the backend, and can integrate with DevOps tools through APIs for extended functionalities.

Base Image Analysis 220 represents the first obligatory layer of security. It scans container images for vulnerabilities and misconfigurations. In a non-limiting example, Anchore can be used to scan Docker and OCI images. Anchore integrates with Development Cluster Tools 245 such as Jenkins and Artifactory to provide real-time scanning as images are built, helping to stop insecure images from being deployed.

Source Code Analysis 225, the second obligatory layer, can be aimed at scanning the source code of microservices. SonarQube can be primarily used for this, which integrates with Development Cluster Tools like BitBucket. The tool performs static code analysis to identify vulnerabilities, coding errors, and improper programming practices. It supports multiple programming languages, including Java, Python, and C++.

Third-party Dependencies Analysis 230, the third obligatory layer, focuses on analyzing third-party libraries and components. Tools such as Dependency Tool are used here, which also integrate with Development Cluster Tools 245 like Jenkins. The tool checks for vulnerabilities in the dependencies against known vulnerability databases like NVD and Snyk and provides automated alerts.

Role-Based Access Control 235 ensures that only authorized personnel have access to specific Application Security tools. It supports both predefined roles like 'Admin,' 'Developer,' and 'Auditor,' as well as customizable roles defined by organizational policies. Access control lists (ACLs) and token-based authentication methods are employed for secure access.

Data Enrichment Module 240 works in conjunction with Development Cluster Tools 245 like Jenkins, Artifactory, and BitBucket. It fetches metadata about code builds, repository status, and more to enrich the security data, facilitating a more in-depth analysis.

Forecasting Analysis 250 uses machine learning models 255 like Random Forests and Neural Networks, along with statistical methods 260 like regression analysis, to predict future security risks. It employs algorithms to analyze historical data from Data Storage 205 and outputs a risk score that can be integrated into the User Interface 215.

Security Score Labeling 265 assigns scores to each microservice based on its current security status. These scores are presented as color codes, RED, YELLOW, and GREEN, aiding in quick risk assessment.

Automation and Efficiency Module 285 streamlines data collection processes. It employs cron jobs and event-driven architectures to collect data at predefined intervals or based on specific triggers. It reduces the scope of human error and improves the system's efficiency.

API Gateway 292 enables communication between the various modules of the system. It uses technologies like GraphQL or RESTful APIs for data interchange and optimizes resource utilization by load balancing and caching responses.

The optional Layer 4 focuses on API Security. RESTler 270 and Corpus Generation Tool 275 are used here. RESTler performs stateful REST API fuzzing, generating test cases based on OpenAPI specifications. Corpus Generation Tool 275 employs AFL++ to generate initial test cases and a Custom Dynamic Instrumentation Tool (DIT) to test non-typical execution branches in target applications, uncovering additional security issues.

System 200 provides a multi-layered approach to managing the security posture of microservices by incorporating both obligatory and optional layers of Application Security, enriched by Development Cluster Tools. This architecture enables comprehensive risk assessment and facilitates collaboration between development and security teams. In an embodiment, Analytics Engine 290 serves as the system's computational core for data analysis. It employs machine learning algorithms like K-Means clustering and Principal Component Analysis to identify data patterns and anomalies. The engine can be built on scalable computing resources, including GPUs for computationally intensive tasks. Data normalization and feature extraction methods are applied before analysis, and the results are stored back in the Data Storage 205 for further querying and reporting.

Alerting Module 295 can be configured to provide real-time notifications to administrators and security teams. It relies on the data processed by Analytics Engine 290 and Forecasting Analysis 250 to trigger alerts. Various notification channels are supported, including but not limited to, email, SMS, and Slack. The module employs rate-limiting to avoid alert fatigue and can provide configurable severity levels for notifications. Alerting Module 295 auto-generates detailed reports based on the data analyzed by Analytics Engine 290 and other modules. These reports can be customized according to time ranges, data types, and key metrics. Scheduled report generation can be also supported, and the reports can be exported in formats such as PDF, CSV, or Excel.

A System Health Monitor (not shown) can be provided to continuously oversee the operational status of each component within system 200. It can be provided to utilize performance metrics to gauge component health. If any component is underperforming or offline, it can be flagged, and notifications are triggered through Alerting Module 295. Automated scripts can be configured to restart failed components.

User Interface 215 can be configured to provide users with a mechanism to execute specific SQL or NoSQL queries on the data stored in Data Storage 205. This feature enables deeper data analysis and can support complex query structures involving joins, filters, and aggregations. The interface can be built using technologies like GraphQL and can provide secure access control to prevent unauthorized data access.

Integration Layer 291 allows system 200 to interface with external systems via secure APIs, employing protocols like OAuth 2.0 for secure access. This makes the system extensible and enables it to pull in data or push data out to third-party applications like external vulnerability databases, DevOps tools, or other analytics platforms.

User Interface 215 serves as a web-based dashboard for system management and monitoring. It employs HTML, CSS, and JavaScript frameworks like Angular for a responsive design. Key metrics and security scores from Security Score Labeling 265 are displayed. Additional widgets can be added for custom KPIs relevant to the organization's security posture.

A Cache Layer (not shown) can be provided to store frequently accessed data in-memory using technologies like Redis or Memcached to reduce database load and improve system response times. This can be particularly useful for data that is read-heavy and not updated frequently, like historical vulnerability data or pre-computed analytics results.

A Configuration Management module provided by User Interface 215 gives administrators the capability to set and modify configurations for various components and modules within system 200. It supports both file-based and UI-based configuration methods and allows for versioning of configuration changes for rollback purposes.

System 200 operates as a comprehensive solution for managing the security posture of microservices, overcoming the limitations of prior technologies by integrating multiple functionalities into a unified, automated framework. It uses a multi-layered architecture that can include obligatory and optional layers of Application Security and can be enriched by Development Cluster Tools. This facilitates better risk assessment and collaboration between development and security teams.

At its core, the system employs Analytics Engine 290 for data analysis. The engine uses machine learning algorithms such as K-Means clustering and Principal Component Analysis to identify patterns and anomalies in security data. Computation can be scalable and uses GPUs for intensive tasks. Data can be first normalized and features are extracted before it undergoes analysis. The results are then stored in Data Storage 205 for future use.

Alerting Module 295 can send notifications through various channels like email or SMS to administrators or security teams based on real-time analytics and forecasting from Forecasting Analysis 250. System Health Monitor oversees the operational status of each module within system 200, flagging any underperformance for immediate action. User Interface 215 provides the ability for users to execute specific queries on stored data for deeper insight.

Alerting Module 295 generates reports based on this data, which can be customized and scheduled as needed. User Interface 215 can be web-based and can provide a dashboard for system management, displaying metrics and security scores. The Cache Layer can store frequently accessed data for improved system performance, while User Interface 215 enables administrators to set system configurations.

System 200 automates the collection and deduplication of data from various Application Security tools, thus reducing redundancy and human error, a shortcoming in previous technologies. It also uses forecasting analysis to predict potential risks, enabling proactive security measures, an aspect not efficiently utilized in prior systems. The role-based access system facilitates better management and collaboration among teams.

In some embodiments, a request can be made to the APS API and a corresponding response received. The source code demonstrates a practical example of how System 200 interacts with the APS API to manage and collect data from various microservices. This interaction facilitates data aggregation and analysis functionalities of the system. For example, the following source code provides an example of an API request and the corresponding response:

```
   **Request:**
   GET /aps/2/resources/18157377-9abe-4e00-a5aa-1e30ae104345/
   HTTP/2
   Host: smartinez.aks.int.zone
   User-Agent: python-requests/2.31.0
   Accept-Encoding: gzip, deflate, br
   Accept: */*
   Connection: keep-alive
   Bw_id: 5c2189e0f98fead39d4f4254a498a73dc
   Cookie:
   JSESSIONID=39s717SKXj0yfycAUT1vCVFx4v2RaS3Lbb4Q3..branding-
   ui-cluster-ui-79554bd7d89-hj6lm; device-
   tag=Y2YxNjY3YzUtZTAmZSMOMjJiLTkYwNmZhMzI0YWE2MjBiSjT3P3M3YM
   XyLz8K6pFgBby3QRaJFCx2Bhj7sHlZw7XgK0v0cJDAiAQC3D%3D
   **Response:**
   HTTP/2 200 OK
   Date: Wed, 13 Mar 2024 09:41:29 GMT
   Server: Apache
   Expires: Mon, 01 Jan 2001 00:00:01 GMT
   Cache-Control: no-cache, no-store
   Content-Type: application/json
   Content-Length: 318
   X-Apsbooster-Response: true
   Content-Range: *
   X-Content-Type-Options: nosniff
   X-Forwarded-Proto: https
   {
     "aps": {
        "schema": "/aps/2/types/155",
        "package": {
          "id": "f154577b-07ee-4a3c-a30d-2e73bd24b5b1",
          "href": "/aps/2/packages/f154577b-07ee-4a3c-a30d-
   2e73bd24b5b1"
        },
        "modified": "2024-02-13T10:35:15Z",
        "id": "18157377-9abe-4e00-a5aa-1e30ae104345",
        "href": "http://parallels.com/fraud-plugins-ui/1.0",
        "status": "aps:ready",
        "revision": 3
      }
         }
```

System 200 can be operably configured to perform steps beginning with the monitoring of release updates for microservices. Projects are created for each microservice and its corresponding release version. Data collection can be initiated, retrieving security data from various tools connected to each microservice. This data can then be analyzed for deduplication and impact fine-tuning, after which forecasting analysis can be run. Security labels are assigned to each microservice based on the analysis, and a comprehensive Security Release report can be generated and distributed to one or more users.

System 200 automates the process of security management for microservices. This can include automated data collection and deduplication, advanced analytics using machine learning, real-time alerting, and comprehensive reporting. The integrated nature of these functionalities reduces the risk of human error, improves the accuracy of security data, and enables proactive security management by leveraging forecasting analysis. The system can be configured to provide extensibility and integration with external tools and systems, thereby enhancing its utility and adaptability. Thereby, system 200 presents a unified, automated, and comprehensive approach to microservice security management, providing improved risk management, increased security, reduced human error, and enhanced utilization of historical data and forecasting analysis.

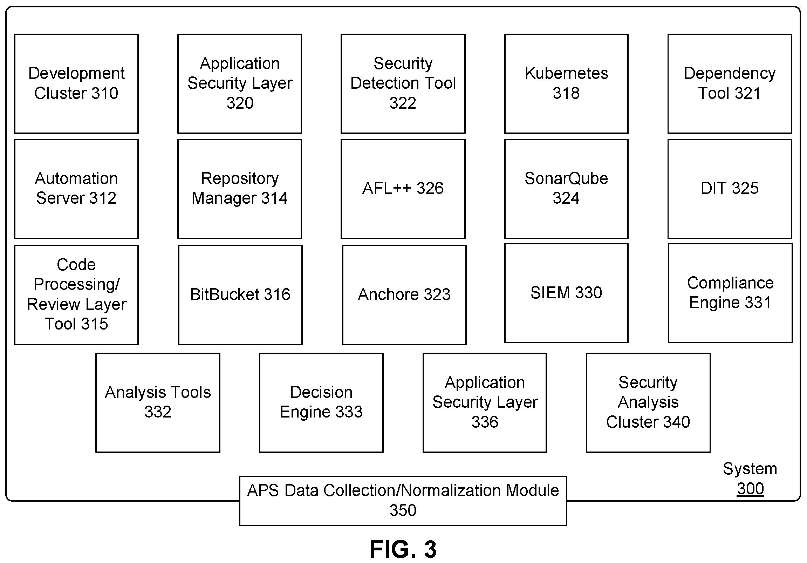

FIG. 3 illustrates System 300 for managing the development and application security of software processes. System 300 provides a unified solution for security assessment in a microservices environment. According to some embodiments, System 300 provides a comprehensive system that addresses various aspects of security comprehensively, enhancing the security landscape of the software development process. System 300 can include Development Cluster 310 and Application Security Layer 336. Different embodiments may encompass variations, adaptations, or alternatives of the components and their interconnections within System 300, providing a flexible and scalable solution for diverse microservices architectures.

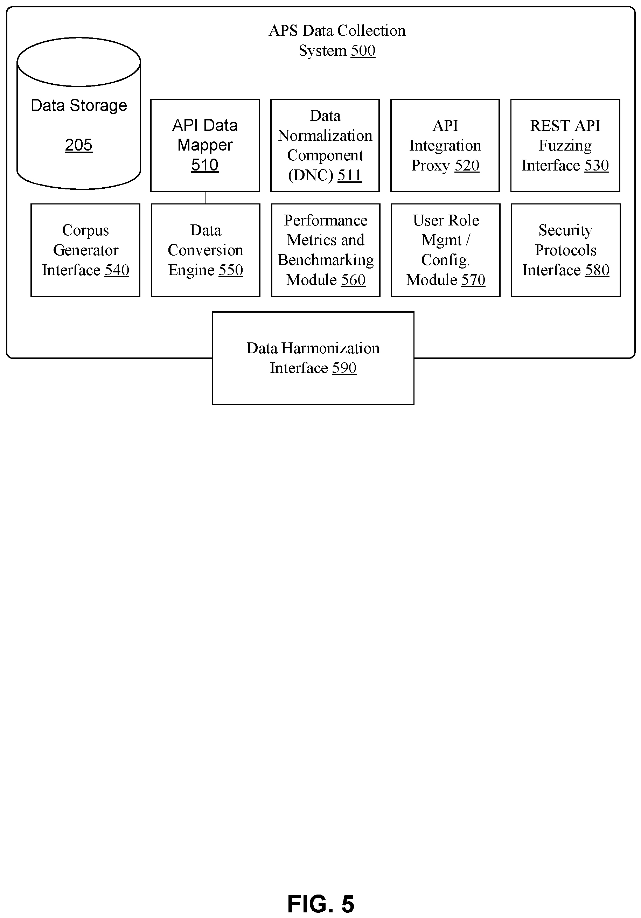

Furthermore, with reference to FIG. 5 described below, System 300 can be configured to integrate with Automated APS Data Collection System 500, a subsystem configured to automate the extraction and formatting of APS data, thus feeding into the Application Security Layer 320 with minimal human intervention. This automation ensures consistency and accuracy of the security data that feeds into the security analysis tools. In some embodiments, System 300 can be further configured to include an APS Data Collection and Normalization Module 350 to automate retrieval and standardization of APS data, enhancing the input quality for Application Security Layer 320.

System 300 comprises Development Cluster 310, which can include one or more components configured to manage various aspects of software development. System 300 can also include Application Security Layer 320, which can include one or more components on the security of the applications and connections between different elements of the development process.

Development Cluster 310 can include several distinct elements that can be used in the software development process, including Automation Server 312, Repository Manager 314, Code Processing/Review Layer Tool 315, BitBucket 316, and Kubernetes 318. Automation Server 312 can be utilized for automating parts of the development process. In a non-limiting example, Automation Server 312 can include Jenkins, or the like. Repository Manager 314 can be another component in the cluster, functioning as a repository manager that supports the software package management. In a non-limiting example, Repository Manager can include Artifactory, or the like. Code Processing/Review Layer 315 can be a specialized tool configured to fit within the specific development environment of System 300. BitBucket 316 serves as a web-based version control repository hosting service that integrates with other parts of the Development Cluster 310. In some embodiments, Kubernetes 318, which can be part of the Development Cluster 310, acts as an orchestration platform, managing containers and the infrastructure.

Application Security Layer 320, as depicted in FIG. 3 of System 300, can include several components like Dependency Tool 321, Security Detection Tool 322, Anchore 323, SonarQube 324, DIT 325, and AFL++ 326. Dependency Tool 321 can be configured to manage software dependencies within the system and to ensure a secure connection to the development components. Security Detection Tool 322 provides security monitoring and vulnerability scanning functions within System 300. Anchore 323 can be involved in the inspection, analysis, and certification of container images, ensuring their integrity. SonarQube 324 performs continuous inspection of code quality. DIT 325 and AFL++ 326, both components of a fuzzer, work together to provide automated testing functionality within System 300. The fuzzer can include DIT 325, a dedicated tool for conducting specific types of testing, and AFL++ 326, an enhancement that supplements the testing process. In some embodiments, the fuzzer can be configured to integrate with the automated data collection outputs of System 500, where DIT 325 can be enhanced to include adaptive algorithms for identifying and testing non-typical execution branches that are dynamically informed by the latest APS data patterns.

In a non-limiting example, within FIG. 3, Automation Server (e.g., Jenkins) 312 can establish connections with Dependency Tool 321, Security Detection Tool 322, and Anchore 323, enabling interaction. Repository Manager 314 can be linked to Anchore 323, creating a bridge between the repository manager and the container image security tool. Code Processing/Review Layer Tool 315 interfaces with SonarQube 324, showcasing their close collaboration in development and code quality inspection. BitBucket 316 can be also connected to SonarQube 324 to enable code inspection. Furthermore, Kubernetes 318 can be integrated with the Fuzzer, comprising DIT 325 and AFL++ 326, establishing connection between the orchestration platform and the testing tools. It's important to note that Dependency Tool 321, Anchore 323, and SonarQube 324 contribute valuable information to the internal database, consolidating data management within System 300.

Within Development Cluster 310, Automation Server 312 can include Jenkins or a similar element for providing an automation server that facilitates continuous integration and continuous delivery (CI/CD) processes. Within System 300, Automation Server 312 can be utilized to automate the process of collecting, analyzing, and reporting security data. This may involve triggering scans in other Application Security tools, coordinating with other elements of the development cluster, and reporting the findings for further analysis. In some embodiments, Automation Server 312 connects with tools such as Dependency Tool 321, Anchore 323, and other Application Security utilities, orchestrating the security assessments across different layers of the microservices architecture. Repository Manager 314 can include Artifactory, or another similar platform, as a binary repository manager integrated within Development Cluster 310 in System 300. It serves as a centralized location for storing and managing binary artifacts and dependencies. In the specific context of System 300, Repository Manager 314 liaises with Anchore 323 to enable the analysis of container images used for deploying microservices. Its ability to manage third-party dependencies and ensure version control aligns with the broader objective of efficient vulnerability management within System 300. In some embodiments, Automation Server 312 can be configured to automatically trigger data collection procedures of System 500, described below, streamlining the integration of development operations with security analytics and enhancing the responsiveness of System 300 to security incidents.

Also within Development Cluster 310, Code Processing/Review Layer Tool 315 can be a custom development tool that may serve various development-related functions, such as version control, code review, build automation, or more specific tasks tailored to the software development process. It collaborates with SonarQube 324 in Application Security Layer 320, focusing on source code analysis to identify potential security issues, including coding errors, vulnerabilities, and improper programming practices. BitBucket 316, part of Development Cluster 310 in System 300, can be a web-based version control repository hosting service. Within the framework of the invention, BitBucket 316 performs source code management, enabling collaboration, branching, and merging. Its specific connection with SonarQube 324 facilitates the analysis of source code and the identification of vulnerabilities, ensuring adherence to secure coding practices.

Within Application Security Layer 320 of System 300, Dependency Tool 321 specializes in third-party dependencies analysis. As microservices often rely on third-party libraries and components, Dependency Tool 321 focuses on analyzing these dependencies for known security issues. By collaborating with Automation Server 312, it ensures that the dependencies are up to date and free from known vulnerabilities. It represents a key aspect of security management in microservices. Security Detection Tool 322 can be configured to enhance the evaluation of security risks associated with microservices. Security Detection Tool 322 could perform tasks such as analyzing security data from multiple sources, identifying overlaps or discrepancies in assessments, and providing a unified view of the security landscape. It can also connect with Automation Server 312, facilitating an automated approach to security analysis, reducing the likelihood of human error, and streamlining the security assessment process. Anchore 323, part of Application Security Layer 320 in System 300, addresses base image analysis. It can be configured to scan container images used for deploying microservices for known vulnerabilities, misconfigurations, or other potential risks. By collaborating with Repository Manager 314 and Automation Server 312, it ensures the foundation of the microservices can be secure, thereby addressing the challenges associated with containerized deployment. SonarQube 324 of Application Security Layer 320 can perform source code analysis. SonarQube 324 can be operatively integrated with Code Processing/Review Layer Tool 315 and BitBucket 316 to perform static code analysis to identify coding errors, vulnerabilities, or improper programming practices. Its role in System 300 aligns with the broader goal of ensuring that the source code of microservices adheres to secure coding standards.

Fuzzer/API Security Tools (e.g., RESTler, Corpus Generation Tool, DIT 325, AFL++ 326) can provide an optional Layer 4 in System 300, focusing on securing the API layer of microservices. RESTler, along with Corpus Generation Tool, DIT 325, and AFL++ 326, analyzes and tests the APIs to identify potential security and reliability issues. The integration of these tools within System 300 ensures that the exposed interfaces are secure, thereby enhancing the security posture of the microservices architecture.

The interconnections between these components within System 300 reflect a multi-layered and cohesive approach to security, addressing different aspects comprehensively and effectively. The collaboration between development and security tools, as outlined in FIG. 3, exemplifies a centralized system configured to aggregate, manage, and analyze security-related information, leading to a more secure and reliable software product.

In some embodiments, System 300 may be configured differently with various interconnections between Development Cluster 310 and Application Security Layer 320. One or more examples may include different configurations of Development Cluster 310, possibly incorporating other development tools or excluding some existing ones. The interconnections may also be modified to suit different architectures or requirements. Similarly, Application Security Layer 320 could be altered or expanded to include additional security features, tools, or functionalities.

The detailed representation in FIG. 3 of System 300 illustrates a comprehensive and adaptable framework for managing both development and security aspects of software processes. By including various components and allowing flexibility in the connections between them, System 300 provides an unconventional platform that can be tailored to diverse needs and specific implementations. Different configurations and adaptations can further enhance the versatility of System 300, supporting a broad range of applications and use cases in the field of software development and security.

In reference to FIG. 3, System 300 is shown, constituting a comprehensive software development environment aimed at managing and evaluating the security posture of microservices. System 300 encompasses Development Cluster 310 and Application Security Layer 320, both working cohesively to provide a unified and efficient method to assess and mitigate security vulnerabilities in microservices.

Development Cluster 310 can include several components that cater to diverse microservices developed using different programming languages, base images, and third-party components. Specifically, Automation Server 312, part of Development Cluster 310, can be configured to perform automation of collecting, analyzing, and reporting security data. In some embodiments, Automation Server 312 connects to Dependency Tool 321, Security Detection Tool 322, and Anchore 323 in Application Security Layer 320, facilitating the integration of diverse security tools. Repository Manager 314 in Development Cluster 310 can be operatively connected with Anchore 323 to enable analysis of container images used for deploying microservices, an important aspect of base image analysis according to some embodiments. Furthermore, Code Processing/Review Layer Tool 315 in Development Cluster 310 collaborates with SonarQube 324, focusing on source code analysis, whereas BitBucket 316 contributes to the scrutiny of source code, augmenting the security assessments. Kubernetes 318, forming part of Development Cluster 310, provides orchestration of containerized microservices and can provide scalability, with connections to the optional fuzzer comprised of DIT 325 and AFL++ 326.

In some embodiments, Development Cluster 310 can include an API Endpoint Mapping Interface that cross-references the dynamic configurations of microservices against a centralized registry of endpoints (e.g., maintained by System 500 described below), thereby ensuring real-time alignment between development activities and security postures.

Within System 300, Application Security Layer 320 further enriches the security landscape by providing a multi-layered approach to address the challenges and vulnerabilities in a microservices environment. Dependency Tool 321, one of the components of Application Security Layer 320, specializes in third-party dependencies analysis. Along with Automation Server 312, it can form a layer that ensures that dependencies are analyzed for known security issues. Security Detection Tool 322, also a constituent of Application Security Layer 320, might be utilized in some embodiments to enhance the evaluation of security risks associated with diverse microservices, providing a clear view of the security posture. Anchore 323, part of Application Security Layer 320, collaborates with Repository Manager 314 and Automation Server 312 for base image analysis. This aspect focuses on scanning base images, providing insights into potential risks and vulnerabilities, which may be tailored or adjusted according to the specific needs of the microservices environment. SonarQube 324 can perform source code analysis, integrated with Code Processing/Review Layer Tool 315 and BitBucket 316 to identify coding errors and incorrect programming practices. Its connection with the development tools helps in static code analysis and contributes to efficient vulnerability management.

In conjunction with AFL++ 326, DIT 325 forms part of an optional fuzzer that emphasizes API Security within System 300. This fuzzing tool, linked to Kubernetes 318, tests cloud services through REST APIs, uncovering vulnerabilities and misconfigurations. AFL++ 326, a widely used fuzzer, and DIT 325 enable RESTler to reach non-typical execution branches, enhancing the security assessment process.

In some embodiments, System 300 can be configured with various interconnections as shown. In a non-limiting example, Automation Server 312 can be connected with Dependency Tool 321, Security Detection Tool 322, and Anchore 323, to facilitate coordination. Repository Manager 314 can be connected to Anchore 323, operably connected between the repository manager and the container image security tool. Code Processing/Review Layer Tool 315 can interface with SonarQube 324, to facilitate development and code quality inspection. BitBucket 316 can interface with SonarQube 324. In addition, Kubernetes 318 can be interconnected with the Fuzzer, encompassing DIT 325 and AFL++ 326, to provide functionality between the orchestration platform and the testing tools. The modules collectively enable efficient data management and analysis within the framework.

In some embodiments, Dependency Tool 321, Security Detection Tool 322, and Anchore 323 can be configured to output to a database, to perform aggregating, managing, and analyzing data generated by Application Security utilities. These connections enable identifying and mitigating security vulnerabilities.

In some embodiments, system 300 can further include Security Analysis Cluster 340. Security Analysis Cluster 340 can include Corporate Security Information and Event Management (SIEM) 330 as a centralized hub for aggregating and correlating logs and events from various sources, including the components of Development Cluster 310 and Application Security Layer 320. By providing real-time analysis of security alerts and facilitating historical data analysis, Corporate SIEM 330 enhances the security posture of the microservices, ensuring timely detection of suspicious activities or potential breaches. Security Analysis Cluster 340 can further include Compliance Engine 331, configured to manage and ensure that that all activities within the system adhere to relevant regulatory and internal compliance requirements. Compliance Engine 331 continually checks the configurations, coding practices, and design of the microservices against predefined compliance standards, such as GDPR, HIPAA, or other industry-specific regulations, thereby reducing legal risks and reinforcing trust within the ecosystem.

In some embodiments, Security Analysis Cluster 340 can also include Analysis Tools 332 comprising various sub-tools configured to manage specific security analytics tasks. These may include risk assessment, threat modeling, incident response analysis, and more. In the context of System 300, Analysis Tools 332 collaborate with Corporate SIEM 330 to facilitate in-depth analysis of the security data, enabling the organization to identify patterns, trends, and potential vulnerabilities that might not be evident from individual data points. Security Analysis Cluster 340 can also include Decision Engine 333. By leveraging machine learning algorithms or other advanced analytics methods, it can take the aggregated data from Corporate SIEM 330, Compliance Engine 331, and Analysis Tools 332 to make informed decisions. This might include automated responses to detected threats, prioritization of remediation tasks, or recommendations for enhancing security controls. Security Analysis Cluster 340 can also include Feedback Loop to Development Cluster 335, a connector providing a continuous communication channel between Security Analysis Cluster 340 and Development Cluster 310. It ensures that insights, findings, and recommendations derived from the security analysis are fed back into the development cycle. Whether it's updating coding practices, patching known vulnerabilities, or revising configurations, this feedback loop fosters an adaptive, responsive, and resilient microservices environment. Security Analysis Cluster 340 can also include Feedback to Application Security Layer 336, configured to ensure that insights obtained from the security analysis are used to update and refine the security controls, processes, and configurations within Application Security Layer 320. This continuous improvement process aligns with the principle of security being an ongoing endeavor rather than a one-time task. Further, as previously mentioned, the optional Layer 4 in System 300 focuses on securing the API layer of microservices. The tools within this layer (e.g., RESTler, Corpus Generation Tool, DIT 325, AFL++ 326) might be tailored to the specific needs of the organization, providing additional flexibility in securing the interfaces and interactions within the microservices architecture.

In some embodiments, User Role Management and Dynamic Configuration Module 570 of System 500, described below, can be incorporated to address the adaptability of System 300 to different microservices environments. As described in detail below, User Role Management and Dynamic Configuration Module 570 dynamically manages the configurations and unique identifiers, ensuring that the development and application security processes are reflective of the specific cloud instance under evaluation.

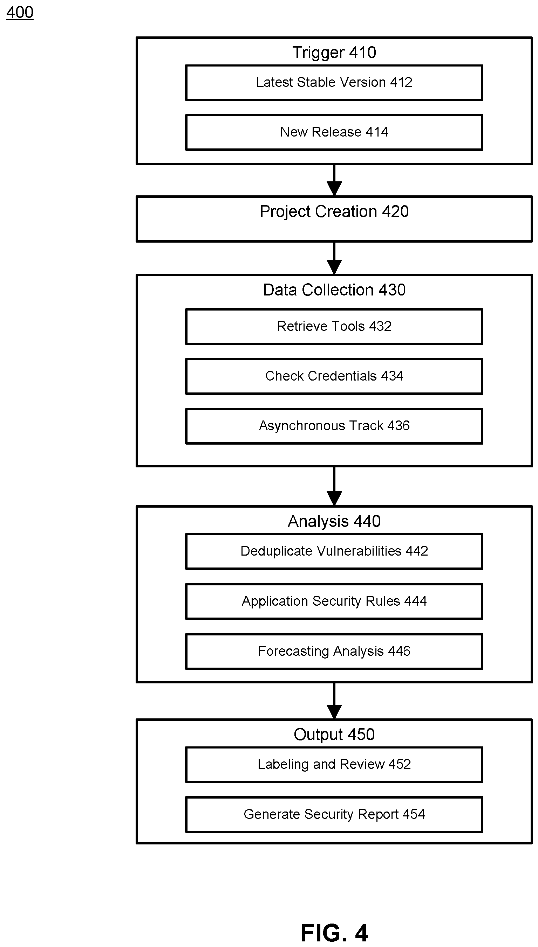

FIG. 4 depicts Process 400, provided as an automated workflow for managing and evaluating the security posture of microservices throughout their development cycle. Process 400 is a workflow configured to manage and evaluate the security posture of microservices in a software development environment. It comprises five distinct yet interlinked stages-Trigger 410, Project Creation 420, Data Collection 430, Analysis 440, and Output 450-which function in an orchestrated manner to automate and enhance various facets of software development and application security.

Trigger 410 stage can involve Latest Stable Version 412 and New Release 414. The Latest Stable Version 412 might include an API request made to specific source code repositories like GitHub. This request could be constructed as RESTful API calls that specifically look to capture data elements, such as the version numbers, date of last modification, and dependencies. New Release 414, by contrast, might employ web scraping methodologies to periodically scan the Confluence Releases page. This can be set up to happen at defined intervals-every 24 hours, for example-capturing data like release notes, version identifiers, and time stamps, which then populate an internal database, potentially developed in relational database management systems like MySQL or PostgreSQL.

Upon completion of the Trigger stage, the workflow proceeds to Project Creation 420. This phase may involve the instantiation of new Project objects, for example, managed by object-oriented programming languages such as Java or Python. These objects serve as a repository for metadata, such as version numbers and microservice names, and are configured to integrate with Automation Server 312 from FIG. 3. They can also be provided to store statuses and results from subsequent stages, effectively centralizing data and facilitating real-time tracking and management.

Process 400 continues with Data Collection 430 phase. This stage may involve a range of sub-tasks. For example, Retrieve Tools 432 could initiate SQL queries targeted at a Connections table configured to store mappings between specific microservices and connected Application Security tools. Check Credentials 434, in some embodiments, might utilize protocols like LDAP or OAuth2 to validate that access can be restricted to authorized users. Asynchronous Track 436 can be configured to implement an asynchronous programming model, perhaps using frameworks like Node.js, to manage parallel data collection tasks. This collected data may be serialized into JSON or XML formats before being stored in a NoSQL database such as MongoDB.

Analysis 440 can be performed, providing several computational and analytical functionalities. Deduplicate Vulnerabilities 442 can employ hash functions to eliminate redundancy in vulnerability records. Application Security Rules 444 can use rule engines to apply predefined security conditions that adjust the impact of vulnerabilities. Forecasting Analysis 446 can employ machine learning algorithms to statistically model future security risks based on historical data.

At Output operation 450, Labeling and Review 452 and Generate Security Report 454 processes are performed. Labeling and Review 452 can utilize algorithms to assign a security score to each microservice. In a non-limiting example, Labeling and Review 452 can utilize Common Vulnerability Scoring System (CVSS) to perform these functions. Generate Security Report 454 can be operative to compile these scores and other key metrics into a detailed document, which could be constructed using specialized reporting software capable of incorporating data visualizations.

Therefore, Process workflow 400 provides a framework for handling a lifecycle of microservice security assessment. It leverages layer analysis, data aggregation, and security protocols to offer an automated solution for security management. By performing analysis based on the three obligatory layers, the process ensures consistent security evaluations. Through its implementation of System 300, it facilitates an integrated approach, ensuring that the system remains up-to-date and adaptable to emerging challenges.

FIG. 5 illustrates Automated APS Data Collection System 500, which can be integrated with System 300 to augment its capability for managing development and application security processes. Automated APS Data Collection System 500 enhances the existing structure of System 300, providing a specialized mechanism for automated collection and formatting of APS data, thereby optimizing the security assessment framework within a microservices environment.

System 500 can include an API Data Mapper 510 that interfaces with the Commerce APS API, conducting methodical mapping of available user-specific methods, APS applications installed, and the accessible inherited APS types and custom operations. The API Data Mapper 510 can employ a data extraction algorithm that systematically maps user permissions to APS data structures, enabling a previously unachieved level of granularity in security assessments. For example, API Data Mapper 510 can employ authentication mechanisms using credentials or public tokens, and can use one or more designated endpoints to systematically gather data, subsequently converting it into the OpenAPI format for uniformity and compatibility with System 300. API Data Mapper 510 collects user-specific methods and operations accessible via an APS bus. Its authentication mechanisms and mapping process enable improved precision in data collection.

API Data Mapper 510 can be configured to perform data ingestion engine for interfacing directly with the APS bus. For example, API Data Mapper 510 can use an authentication manager to perform API calls secured by OAuth 2.0 protocols, ensuring secure and context-specific data retrieval. API Data Mapper 510 can employ an intelligent enumeration protocol capable of dynamically identifying and listing available APS types and their associated endpoints using service reflection techniques.

A Data Normalization Component (DNC) 511 can be integrated within the API Data Mapper 510 implement an extensible logic framework to translate APS Schema formats into OpenAPI specifications. For example, DNC 511 can use XSLT (Extensible Stylesheet Language Transformations), custom scripting, other techniques, or a combination thereof, to map JSON or XML schema properties accurately into OpenAPI components. The transformation logic can be arranged to maintain data integrity during conversion and ensure that the resultant OpenAPI documents are compliant with the Swagger 2.0 or OpenAPI 3.0 standards.

Additionally, System 500 can include an API Integration Proxy 520, which can be a conduit for facilitating the integration of various API testing tools with the APS bus, thereby directly enabling the testing of the cloud instance. The results from API Integration Proxy 520 can be provided as inputs for the Application Security Layer of System 300, allowing for an in-depth security analysis. API Integration Proxy 520 serves as a unique gateway that streamlines the testing of cloud instances by offering a single point of entry for various API testing tools, thereby simplifying the integration process and reducing the complexity inherent in security testing procedures.

To support automated testing, System 500 incorporates REST API Fuzzing Interface 530, configured to operably integrate with tools including RESTler, and a Corpus Generator Interface 540, enabling the creation of specialized corpuses from the formatted APS data collected by the API Data Mapper 510.

System 500 can include Data Conversion Engine 550 configured to perform conversion of APS data from proprietary formats into standards recognized by the components of System 300. This conversion ensures that data are readily ingested and utilized across different layers of System 300 without compatibility issues.

System 500 can include a Performance Metrics and Benchmarking Module 560 as an evaluation framework to measure the efficacy of the automated APS data collection methods. It ensures that the processes align with the security enhancement objectives of System 300.

System 500 also integrates User Role Management and Dynamic Configuration Module 570 to perform dynamic microservice configurations and manage unique identifiers across platform installations. It manages the unique identifiers and dynamic API endpoints to ensure that the collected data accurately reflects the specific instance being analyzed. User Role Management and Dynamic Configuration Module 570 provides adaptability required to ensure that data collection can be reflective of the specific environment under analysis.

System 500 can include Security Protocols Interface 580 to uphold stringent security standards during data collection and processing activities. This interface safeguards the integrity and confidentiality of data exchange within System 300.

The integration of Automated APS Data Collection System 500 into System 300 as detailed herein effectively enhances the security posture of the microservices architecture by introducing robust, automated APS data collection methods, which facilitate a comprehensive security assessment within the System 300 framework. This integration can be implemented via Data Harmonization Interface 590 that aligns APS data structures with System 300's security models, enhancing the fidelity of security assessments. Operational interdependence between Systems 300 and 500 enables data fed from the APS Data Collection to the Application Security Layer to enhance the accuracy of vulnerability assessments and predictive analytics.

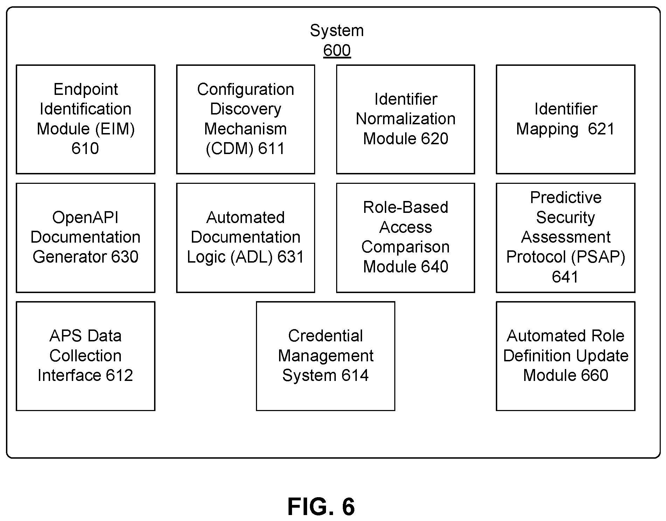

FIG. 6 illustrates System 600 for managing application programming interface (API) data within a cloud instance, which can be an embodiment of System 500. System 600 can be configured to provide a comprehensive solution for the automated identification and standardization of API endpoints, generation of role-specific OpenAPI documentation, and enhancement of security analysis through predictive vulnerability assessment.

System 600 can include an Endpoint Identification Module (EIM) 610 that can automatically identify API endpoints based on user role credentials and dynamically adapt the identification in response to configuration changes within the cloud instance. This module engages with the cloud infrastructure to monitor and recognize API endpoints, ensuring accurate and up-to-date endpoint mapping for various user roles. EIM 610 can include a Configuration Discovery Mechanism (CDM) 611. The CDM 611 can be configured to perform automatic detection and cataloging of API endpoints, leveraging user role credentials for scope definition. The mechanism adapts dynamically to configuration changes within the cloud instance, facilitated by a continuous integration listener that polls for updates to the service architecture.

System 600 can include Identifier Normalization Module 620. This module converts instance-specific identifiers to a standardized format, facilitating uniformity across different cloud instances. The normalization process can include an algorithmic mapping of identifiers to OpenAPI components, considering their interdependencies and hierarchical relationships within the API structures. Identifier Normalization Module 620 can use a specialized translation algorithm that reconciles the format disparities between cloud instances, which facilitates the portability and comparability of API data for comprehensive security analysis. Identifier Normalization Module 620 can include an Identifier Mapping Algorithm (IMA) 621. IMA 621 processes and standardizes the identifiers through algorithmic assessments that consider the hierarchical and relational data structures of the APS. Post-processing, the identifiers are mapped to uniform descriptors, ensuring API endpoint consistency across varying instances of the cloud commerce platform.

System 600 can include an OpenAPI Documentation Generator 630 operably connected to Identifier Normalization Module 620 and configured to produce role-specific API documentation based on the normalized identifiers. This generator ensures that the API endpoint data is portable across different cloud instances, thereby standardizing API security analysis and documentation. OpenAPI Documentation Generator 630 can be configured to perform automation of API documentation based on specific roles defined within the commerce environment. OpenAPI Documentation Generator 630 can include an Automated Documentation Logic (ADL) 631. The ADL 631 utilizes the normalized identifiers to automate the creation of role-specific OpenAPI documentation. It can be programmed to capture the structural and semantic nuances of the APS data and translate them into comprehensive API documentation, ready for consumption by testing tools and developers alike.

System 600 can include a Role-Based Access Comparison Module 640. This module can be configured to contrast API accessibility across various user roles to generate a comprehensive security access report. It employs historical API usage data and machine learning algorithms to predict potential future vulnerabilities and generate preemptive security measures, thereby enhancing the proactive capabilities of the cloud instance's security infrastructure. The Role-Based Access Comparison Module 640 contrasts API accessibility and also integrates machine learning algorithms to predict vulnerabilities. Role-Based Access Comparison Module 640 can include a Predictive Security Assessment Protocol (PSAP) 641. The PSAP 641 employs advanced machine learning algorithms to analyze historical API usage and security data to predict potential vulnerabilities. It can be configured to cross-reference API accessibility against user roles to generate a proactive security access report that aids in preemptive security measures. In some embodiments, PSAP 641 can implement machine learning methods to evaluate and predict the API endpoint vulnerabilities from standardized data, thereby strengthening the preemptive security measures of System 600.

Moreover, System 600 can include an automated Role Definition Update Module 660 that can revise user role permissions in response to detected changes in the API landscape, ensuring that the security posture of the system remains consistent with the current API configuration.

Endpoint Identification Module 610 can include APS Data Collection Interface 612 within System 600. This interface automatically retrieves and formats application data from the cloud instance into a structured format that can be compatible with the internal vulnerability detection and tracking system, thus enabling an enhanced application security level. Endpoint Identification Module 610 can further include a Credential Management System 614 that automates the authentication process for collecting APS data, facilitating access to APIs with various levels of user privileges, including the acquisition of public tokens for anonymous access when required.

OpenAPI Documentation Generator 630 can include a conversion tool. This tool automatically translates APS schema format data into the OpenAPI standard, enabling integration with API testing tools and the utilization of collected API data for enhanced security analysis.

System 600 can include a Data Integration Interface 660 configured to feed the collected API data directly into a security analysis layer of a vulnerability detection tool. This integration enhances automated testing for security and reliability, leveraging structured data to inform the tool's analysis and detection capabilities. To ensure that collected data can be effectively utilized, APS Data Collection Interface 612 within System 600 enables direct feeding of API data into Layer 4 of System 300, enhancing the system's capabilities in automated security testing.

Thereby, System 600 provides an automated and streamlined approach to API data management and security within a cloud commerce framework, significantly improving the efficacy and responsiveness of application security measures.

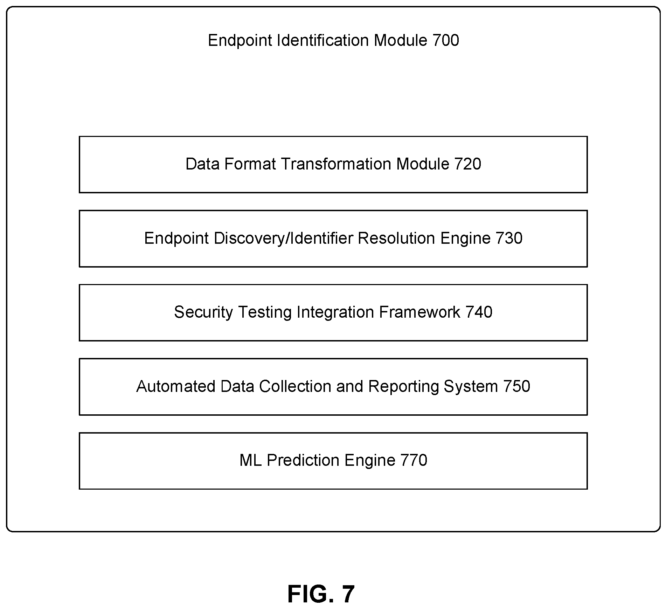

FIG. 7 illustrates Endpoint Identification Module 700 for enhancing security and efficiency in managing Application Programming Interface (API) data within a cloud commerce environment. Endpoint Identification Module 700 can be an embodiment of Endpoint Identification Module 610 and can be configured to provide a structured approach to perform automated scanning of the cloud instance. Endpoint Identification Module 700 can be configured to intelligently adapt to configuration changes to minimize redundant data processing and network usage. The system can be further configured to map identified endpoints and their associated Global Unique Identifiers (identifiers) to standardized descriptors, utilizing an algorithm that assesses interdependencies and hierarchical relationships within the API structures.

Endpoint Identification Module 700 commences scanning by identifying API endpoints accessible based on user roles. This module can modify scanning parameters in real-time in response to any configuration changes within the cloud instance, thereby streamlining the endpoint identification process. The Endpoint Identification Module 700 can be configured to avoid scanning of unchanged or previously scanned API endpoints to reduce unnecessary data processing and conserve network resources.

Endpoint Identification Module 700 can include a Data Format Transformation Module 720 that automatically converts data from the APS schema into a structured format as required by an automated vulnerability detection tool. Data Format Transformation Module 720 incorporates an algorithm to translate APS schema fields to the desired format, ensuring that the data remains consistent and accurate post-transformation. The Data Format Transformation Module 720 can be configured to validate and ensure that data is correctly formatted for effective integration and analysis within the System 300 system.

Endpoint Identification Module 700 can include Endpoint Discovery and Identifier Resolution Engine 730 to perform dynamic discovery of API endpoints and resolves identifiers to maintain uniformity across different cloud instances. It leverages an advanced discovery algorithm that utilizes REST API capabilities to detect new or modified endpoints. The engine can be configured to perform identifier mapping, which involves reconciling instance-specific identifiers with standardized descriptors, ensuring consistency in the identification of API endpoints across varying instances.

Endpoint Identification Module 700 can also include a Security Testing Integration Framework 740 that facilitates the incorporation of external security testing tools into the cloud instance. This framework can be configured to work in conjunction with security tools such as the RESTler fuzzer, automating the security testing of identified endpoints. The Security Testing Integration Framework 740 enables the extension of security testing capabilities, allowing for a broad and thorough assessment of potential security vulnerabilities within the API endpoints.

Endpoint Identification Module 700 can also include an Automated Data Collection and Reporting System 750 integrated to automate the gathering and reporting of data derived from the security testing of API endpoints. This system schedules the security tests, executes them, and processes the outcomes, generating reports in a format that can be compatible with the System 300 system's analytical requirements. The Automated Data Collection and Reporting System 750 can be configured to record and analyze data collected from these tests to provide a comprehensive overview of the security status of the API endpoints.

Endpoint Identification Module 700 can also include a Machine Learning-Powered Prediction Engine 770 that applies machine learning techniques to historical API usage and security test data to predict future vulnerabilities. This engine enhances the proactive detection capabilities of the System 300 system, enabling it to forecast and preemptively address potential security issues within the cloud commerce environment.

Thereby, Endpoint Identification Module 700 operates in a synchronized manner, ensuring that the cloud instance is not only protected against current security and future threats. Through the integration of these modules and their underlying algorithms, Endpoint Identification Module 700 can provide an environment that maintains high security and operational efficiency.

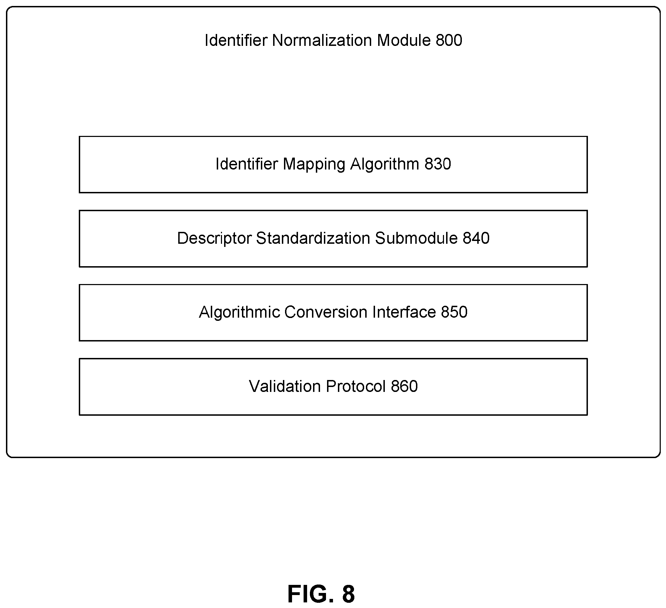

FIG. 8 depicts the Identifier Normalization Module 820, configured to standardize Global Unique Identifiers (GUIDs, or "identifiers") within a cloud commerce environment. Identifier Normalization Module 820, which can be an embodiment of Identifier Normalization Module 620, can perform transforming of instance-specific identifiers into a universal format, enabling consistent identification and management of API endpoints across different cloud instances.

Identifier Normalization Module 820 can be configured to perform an identifier Mapping Algorithm. This algorithm actively assesses and processes the identifiers associated with API endpoints, taking into account the intricate interdependencies and hierarchical structures prevalent in cloud commerce APIs. It maps these identifiers to standardized descriptors, facilitating uniform identification across various environments and enhancing the interoperability of cloud services.

Identifier Normalization Module 820 also integrates a Descriptor Standardization Submodule. This submodule directly receives the mapped identifiers and applies a uniform descriptor format to them, ensuring they adhere to industry standards. The process not only aids in achieving consistency across cloud instances but also simplifies the integration and management of API endpoints in diverse environments.

Identifier Normalization Module 820 can include an Algorithmic Conversion Interface. This interface executes the conversion logic, translating proprietary identifier formats into the standardized descriptors. It incorporates error-checking protocols to ensure the accuracy of the conversion process, maintaining the uniqueness and integrity of each identifier post-transformation.

To accommodate dynamic changes within the cloud commerce environment, Identifier Normalization Module 820 can include an Adaptation Logic Mechanism. This mechanism adjusts the normalization rules in real-time, responding to any updates or modifications in the API structure or cloud service configurations. It ensures that Identifier Normalization Module 820's processing logic remains aligned with the current specifications of the cloud instance, thereby maintaining the efficacy of the identifier normalization process.

A Validation Protocol within Identifier Normalization Module 820 verifies the standardized identifiers against their original formats. This protocol ensures the normalization process has accurately transformed the identifiers without introducing discrepancies. It maintains the reliability of the API endpoint identification, mitigating errors in the identifier normalization process.

Identifier Normalization Module 820 can be configured to perform normalization of identifiers. It supports the operation and security analysis within cloud commerce environments by providing a robust framework for the standardized identification of API endpoints.

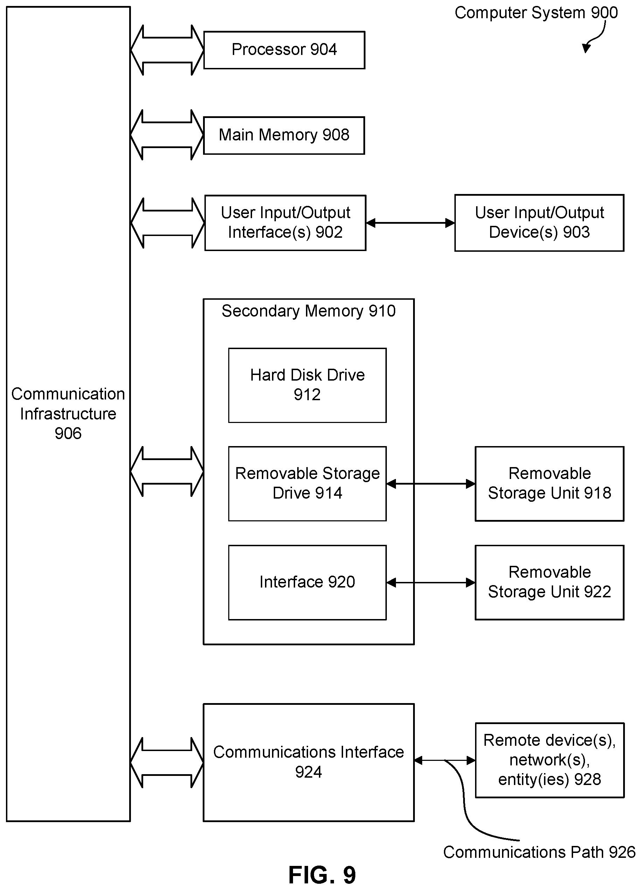

FIG. 9 is a block diagram of example components of device 900. One or more computer systems 900 may be used, for example, to implement any of the embodiments discussed herein, as well as combinations and sub-combinations thereof. Computer system 900 may include one or more processors (also called central processing units, or CPUs), such as a processor 904. Processor 904 may be connected to a communication infrastructure or bus 906.

Computer system 900 may also include user input/output device(s) 903, such as monitors, keyboards, pointing devices, etc., which may communicate with communication infrastructure 906 through user input/output interface(s) 902.

One or more processors 904 may be a graphics processing unit (GPU). In an embodiment, a GPU may be a processor that can be a specialized electronic circuit configured to process mathematically intensive applications. The GPU may have a parallel structure that can be efficient for parallel processing of large blocks of data, such as mathematically intensive data common to computer graphics applications, images, videos, etc.

Computer system 900 may also include a main or primary memory 908, such as random access memory (RAM). Main memory 908 may include one or more levels of cache. Main memory 908 may have stored therein control logic (i.e., computer software) and/or data.

Computer system 900 may also include one or more secondary storage devices or memory 910. Secondary memory 910 may include, for example, a hard disk drive 912 and/or a removable storage device or drive 914.

Removable storage drive 914 may interact with a removable storage unit 918. Removable storage unit 918 may include a computer-usable or readable storage device having stored thereon computer software (control logic) and/or data. Removable storage unit 918 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 914 may read from and/or write to removable storage unit 918.

Secondary memory 910 may include other means, devices, components, instrumentalities or other approaches for allowing computer programs and/or other instructions and/or data to be accessed by computer system 900. Such means, devices, components, instrumentalities or other approaches may include, for example, a removable storage unit 922 and an interface 920. Examples of the removable storage unit 922 and the interface 920 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 900 may further include a communication or network interface 924. Communication interface 924 may enable computer system 900 to communicate and interact with any combination of external devices, external networks, external entities, etc. (individually and collectively referenced by reference number 928). For example, communication interface 924 may allow computer system 900 to communicate with external or remote devices 928 over communications path 926, which may be wired and/or wireless (or a combination thereof), and which may include any combination of LANs, WANs, the Internet, etc. Control logic and/or data may be transmitted to and from computer system 900 via communication path 926.

Computer system 900 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 900 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 900 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 900, main memory 908, secondary memory 910, and removable storage units 918 and 922, as well as tangible articles of manufacture embodying any combination of the foregoing. Such control logic, when executed by one or more data processing devices (such as computer system 900), may cause such data processing devices to operate as described herein.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and identifierance presented herein. It is to be understood that the phraseology or terminology herein is for the purpose of description and not of limitation, such that the terminology or phraseology of the present specification is to be interpreted by the skilled artisan in light of the teachings and identifierance.

The breadth and scope of the present invention should not be limited by any of the above-described exemplary embodiments, but should be defined only in accordance with the following claims and their equivalents.

## Claims

1. A system for managing application programming interface (API) data within a cloud instance, comprising:
an endpoint identification module configured to automatically identify API endpoints based on user role credentials and dynamically adapt the identification in response to configuration changes within the cloud environment;
an Identifier Normalization Module configured to convert instance-specific identifiers to a standardized format; and
a role-based access comparison module configured to contrast API accessibility across various user roles to generate a comprehensive security access report based on historical API usage data and one or more machine learning algorithms to predict potential future vulnerabilities and generate preemptive security measures,
wherein the Identifier Normalization Module employs an algorithm to map identifiers to API components based on their interdependencies and hierarchical relationships within the API structures, and
wherein the documentation generator is configured to provide API endpoint data portability across different cloud instances for standardizing API security analysis and documentation.

2. The system of claim 1, further comprising an automated role definition update module that revises user role permissions in accordance with detected changes in the API landscape.

3. The system of claim 1 or claim 2, wherein the endpoint identification module further comprises a data collection interface configured to automatically retrieve and format application data from the cloud instance into a structured format compatible with the internal vulnerability detection and tracking system, thereby enabling an enhanced application security level.

4. The system of any preceding claim, further comprising a documentation generator configured to produce role-specific API documentation based on the normalized identifiers; wherein the documentation generator further comprises:
a data normalization module configured to translate proprietary data formats into standardized formats recognized by the security analysis tools; and
a conversion tool configured to automatically translate APS schema format data into a Natural Language Processing (NLP) standard, configured to facilitate integration of API testing tools and the utilization of collected API data for enhanced security analysis.

5. The system any preceding claim, wherein the endpoint identification module further comprises a credential management system that automates the authentication process for collecting APS data, facilitating access to APIs with various levels of user privileges, including the acquisition of public tokens for anonymous access when required.

6. The system of any preceding claim, wherein the role-based access comparison module is further configured to interface with a REST API tool, enabling the creation of data corpuses that include test cases and other security-relevant information to support comprehensive security analysis and vulnerability detection.

7. The system of any preceding claim, further comprising a data integration interface that is configured to feed the collected API data directly into a security analysis layer of a vulnerability detection tool to enhance automated testing for security and reliability.

8. A computer-implemented method for enhancing security and efficiency in managing Application Programming Interface (API) data within a cloud commerce environment, the method comprising:
initiating an automated scanning of the cloud instance for API endpoints accessible to predetermined user roles, wherein the scanning comprises dynamically adapting based on configuration changes within the cloud instance to minimize redundant data processing and network usage; and
mapping identified endpoints and their associated Global Unique Identifiers (identifiers) to standardized descriptors by employing an algorithm that assesses interdependencies and hierarchical relationships within the API structures.

9. The computer-implemented method of claim 8, further comprising automatically retrieving and formatting application data from the cloud instance into a structured format compatible with an internal vulnerability detection and tracking tool through an APS data collection interface, employing a data normalization algorithm that ensures data integrity and compatibility, enabling enhanced application security analysis.

10. The computer-implemented method of claim 8 or 9, further comprising automatically retrieving and formatting application data from the cloud instance into a structured format compatible with a vulnerability detection tool through an APS data collection interface, enabling enhanced application security analysis by the vulnerability detection tool.

11. The computer-implemented method of any of claims 8 to 10, further comprising:
generating, by a document generator implementing a Natural Language Processing (NLP) standard, a specification document that reflects the mapped endpoints, the generating enhancing data portability across two or more different cloud instances;
analyzing differences in API access between the user roles to create an access privilege matrix within the generated specification, wherein the analyzing employs one or more machine learning algorithms to predict potential future vulnerabilities based on historical API usage data, thereby generating preemptive security measures; and
converting APS schema format data into the NLP standard using a conversion tool within the documentation generator, facilitating integration of one or more API testing tools and utilization of collected API data for advanced security analysis.

12. The computer-implemented method of any of claims 8 to 11, further comprising automating the authentication process for collecting APS data through a credential management system, which facilitates access to APIs with various levels of user privileges, including acquisition of public tokens for anonymous access when such access is required.

13. The computer-implemented method of any of claims 8 to 12, further comprising interfacing with a REST API tool to create data corpuses that include test cases and other security-relevant information, thereby supporting a comprehensive security analysis and vulnerability detection framework.

14. The computer-implemented method of any of claims 8 to 13, further comprising feeding the collected API data directly into a security analysis layer of a vulnerability detection tool to enhance the automated testing for security and reliability bugs, utilizing the structured format data to inform the tool's analysis and detection capabilities.

15. A non-transitory computer-readable storage medium encoded with instructions that, when executed by a processor, perform operations comprising:
execute an endpoint discovery routine to aggregate available API endpoints as per user role definitions; and
process the aggregated API endpoints through an identifier translation routine to standardize identifiers across the cloud commerce platform.

16. The computer-readable medium of claim 15, wherein the instructions further cause the processor to automatically retrieve and format application data from the cloud instance into a structured format compatible with an internal vulnerability detection and tracking tool through an APS data collection interface, enabling enhanced application security analysis by the said tool.

17. The computer-readable medium of claim 15 or 16, wherein the instructions further cause the processor to:
generate, by a document generator implementing a Natural Language Processing (NLP) standard, a specification document utilizing the standardized identifiers;
perform a comparative access analysis to ascertain differential access permissions among user roles; and
convert APS schema format data into the NLP standard using a conversion tool within the documentation generator, thereby facilitating the integration of **API** testing tools and the utilization of collected **API** data for advanced security analysis.

18. The computer-readable medium of any of claims 15 to 17, wherein the instructions further cause the processor to automate the authentication process for collecting APS data through a credential management system, which facilitates access to APIs with various levels of user privileges, including the acquisition of public tokens for anonymous access when such access is required.

19. The computer-readable medium of any of claims 15 to 18, wherein the instructions further cause the processor to communicate with a REST **API** tool to create data corpuses that include test cases and other security-relevant information, thereby supporting a comprehensive security analysis and vulnerability detection framework.

20. The computer-readable medium of any of claims 15 to 19, wherein the instructions further cause the processor to feed the collected **API** data directly into a security analysis layer of a vulnerability detection tool to enhance the automated testing for security and reliability bugs, utilizing the structured format data to inform the tool's analysis and detection capabilities.
